# EUROPEAN PATENT SPECIFICATION

(11) **EP 4 527 779 B1**
(45) Date of publication and mention of the grant of the patent: **11.03.2026**
(21) Application number: 25155958.9
(22) Date of filing: 09.06.2021
(51) Int. Cl.: B66C 1/44, B66C 1/42, B66C 1/62, B66C 13/08

(54) **WAVE-DISSIPATING BLOCK GRIPPING DEVICE AND WAVE-DISSIPATING BLOCK MOVING METHOD**
VORRICHTUNG ZUM GREIFEN EINES WELLENABSCHWÄCHENDEN BLOCKS UND VERFAHREN ZUM BEWEGEN EINES WELLENABSCHWÄCHENDEN BLOCKS
DISPOSITIF DE PRÉHENSION DE BLOC DE DISSIPATION D'ONDES ET PROCÉDÉ DE DÉPLACEMENT DE BLOC DE DISSIPATION D'ONDES

(43) Date of publication of application: 26.03.2025
(62) Divisional of application: 21944449.4
(73) Proprietor: Suzuken Kogyo Co., Ltd., Fuefuki-shi, Yamanashi 406-0812 (JP)
(72) Inventor: Suzuki, Yasunobu, Yamanashi (JP)
(74) Representative: Twelmeier Mommer & Partner

(56) References cited:
- JP-A- 2001 063 958
- JP-A- 2005 206 291
- JP-A- 2005 330 034

## Description

### Technical Field

The present invention relates to a wave dissipating block grapple-machine. A wave dissipating block grapple-machine according to the preamble of claim 1 is disclosed in JP 2001 063958 A1.

### Background Art

Concrete wave dissipating blocks having four leg portions extending from the barycentric position of a regular tetrahedron toward the respective vertexes, i.e., extending in respective different directions, conventionally provide strong interlocking force when piled up because of their unique shape. Since the energy of waves in rivers and seas can thus be effectively attenuated and dissipated, wave dissipating blocks are also called wave dissipating foundation blocks, blocks for dissipating waves, etc., and are used for bank protection and water use purposes.

However, when a work machine such as a crane hangs up and down a wave dissipating block, a plurality of wires generally need to be used due to the unique shape. In most cases, the wrapped plurality of wires are manually fastened and unfastened under the wave dissipating block (wire slinging operations (anchoring operations)). Since wave dissipating blocks are heavy in weight, the wires used are also heavy, and a lot of effort is needed to simply fasten and unfasten the wires manually. Moreover, wave dissipating blocks are often used in sites with poor footing, which is accompanied with a lot of danger to the workers. In particular, in piling up a plurality of wave dissipating blocks, instructions need to be issued by a worker on the wave dissipating block near ones to be situated lower. The surfaces of the wave dissipating blocks are slippery, and the working environment is unstable. Workers slipping or falling off are therefore likely, and a lot of accidents have occurred.

Under the circumstances above, various grapple-machines have heretofore been proposed. For example, to resolve the dangerous manual slinging operations, a grapple-machine according to Patent Literature 1 is configured to grab the junction of leg portions extending in three directions in a plan view by closing three holding members. In other words, Patent Literature 1 shows the configuration in which the vicinity of the barycentric portion of a wave dissipating block is grabbed, whereby the wave dissipating block can be stably grabbed and moved. And also, a grapple-machine according to Patent Literature 2 includes a first holding mechanism and a second holding mechanism configured to radially hold respective two of the leg portions; and a base member that is rotatably supported by the work machine, the base member being configured to support the first holding mechanism and the second holding mechanism, wherein the first holding mechanism includes a pair of first holding members that are rotatably supported by the base member and can grab one of the two leg portions by bringing their: end portions close to each other, and a first driving device configured to drive the pair of first holding members to rotate.

### Citation List

### Patent Literature

Patent Literature 1: Japanese Patent Application Laid-Open No. 2019-85179
Patent Literature 2: Japanese Patent Application Laid-Open No. 2001-063958

### Summary of Invention

### Technical Problem

However, the grapple-machine described in Patent Literature 1 is sometimes unable to stably grab a wave dissipating block unless one of the leg portions is situated directly downward or directly upward and no obstacles are around the vicinity of the barycentric portion of the wave dissipating block. In other words, if wave dissipating blocks are restacked and moved several times or stocked in preparation for natural disasters, the wave dissipating blocks piled up can be difficult to grab near the barycentric portions. In such cases, the grapple-machine described in Patent Literature 1 may have difficulty in grabbing and moving the wave dissipating blocks.

Since Patent Literature 1 assumes a state where a wave dissipating block is situated with a leg portion directly upward as well, the grapple-machine needs to have a size such that an entire leg portion is embraced (for example, for a wave dissipating block of approximately 16 tons in weight and approximately 3 m in height, the grapple-machine is approximately 12 tons in weight and approximately 6 m in height). The grapple-machine according to Patent Literature 1 can thus be large and heavy in itself with respect to wave dissipating blocks.

The present invention has been achieved to solve the aforementioned problems, and an object thereof is to provide a small-sized lightweight wave dissipating block grapple-machine capable of grabbing and moving a wave dissipating block safely and more reliably without a dangerous manual slinging operation. Solution to Problem

The present invention solves the aforementioned problems through the provision of a wave dissipating block grapple-machine that is supported by a work machine and can grab a wave dissipating block having a plurality of leg portions extending in respective different directions, the wave dissipating block grapple-machine including: a first holding mechanism and a second holding mechanism configured to radially hold respective two of the leg portions; and a base member that is rotatably supported by the work machine, the base member being configured to support the first holding mechanism and the second holding mechanism, wherein the first holding mechanism includes a pair of first holding members that are rotatably supported by the base member and can grab one of the two leg portions by bringing their end portions close to each other, and a first driving device configured to drive the pair of first holding members to rotate; the first driving device includes one linear motion mechanism that is built in the wave dissipating block grapple-machine and has respective ends of which upper ends of the pair of first holding members are directly coupled; the linear motion mechanism is a cylinder mechanism including two cylinder chambers where fluid can flow in and that are separated by the piston; the first driving device includes a driving mechanism that is built in the wave dissipating block grapple-machine and drives the one linear motion mechanism, the driving mechanism includes an on-off valve that can prevent the fluid in the two cylinder chambers from decreasing and fix an operation of the linear motion mechanism; the driving mechanism includes a first switching channel member and a second switching channel member that are both connected to the two cylinder chambers and each include two on-off valves, a first electric linear motion mechanism configured to simultaneously open and close one of the two on-off valves in the first switching channel member and one of the two on-off valves in the second switching channel member, and a second electric linear motion mechanism configured to simultaneously open and close the other on-off valves in the first switching channel member and the second switching channel member; and the second switching channel member is configured so that a fluid pressure inlet for feeding the fluid into the two cylinder chambers from a pump is disposed between the two on-off valves, and the first switching channel member is configured so that a fluid discharge outlet for discharging the fluid from the two cylinder chambers is disposed between the two on-off valves.

In the present invention, the first holding mechanism and the second holding mechanism that radially hold respective two of the leg portions of the wave dissipating block having the plurality of leg portions extending in respective different directions are provided. The wave dissipating block can thus be grabbed more reliably since the number of wave dissipating blocks in an orientation where two leg portions can be grabbed is considered to be greater than that of wave dissipating blocks in an orientation where the vicinity of the barycentric portion can be grabbed as described in the conventional art. Moreover, the first holding mechanism and the second holding mechanism can be configured to only radially hold respective two leg portions. Such a configuration can eliminate the need for a large holding mechanism to embrace an entire leg portion.

### Advantageous Effects of Invention

According to the present invention, a small-sized lightweight wave dissipating block grapple-machine capable of grabbing and moving a wave dissipating block safely and more reliably without a dangerous manual slinging operation can be provided.

### Brief Description of Drawings

FIG. 1 is a schematic diagram showing a work machine, a wave dissipating block grapple-machine, and a wave dissipating block according to a first embodiment of the present invention.
FIG. 2 is a diagram showing the wave dissipating block grapple-machine of FIG. 1 (FIG. 2(A) is a perspective view, and FIG. 2(B) is a side view).
FIG. 3 is a diagram showing a driving mechanism of a first driving device and a second driving device of the wave dissipating block grapple-machine of FIG. 2 (FIG. 3(A) is a top view, FIG. 3(B) is a side view, and FIG. 3(C) is a perspective view).
FIG. 4 is a block diagram showing the first driving device (second driving device) and the driving mechanism of FIG. 3.

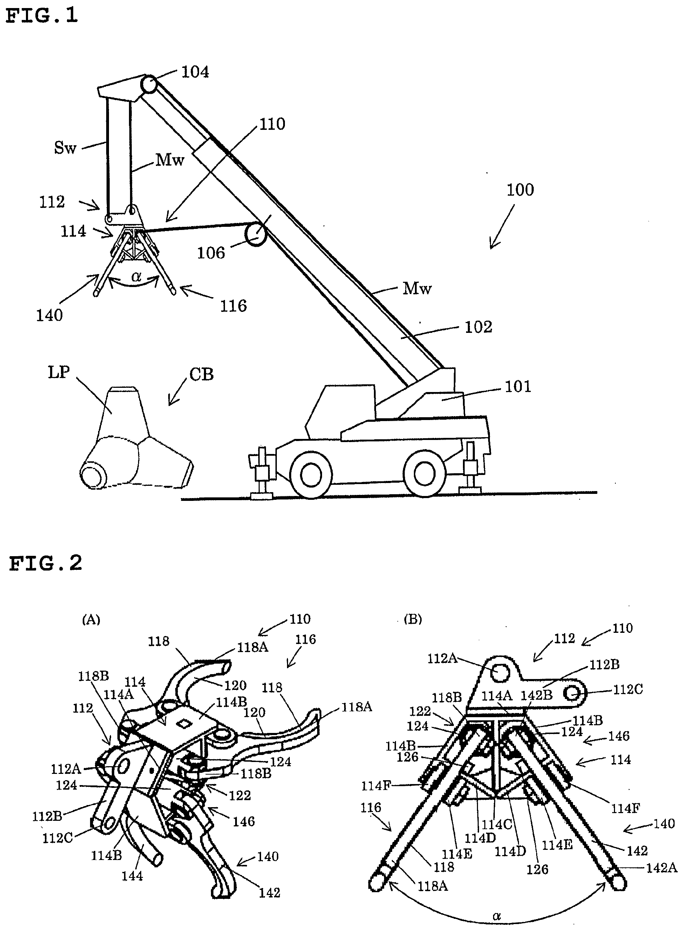

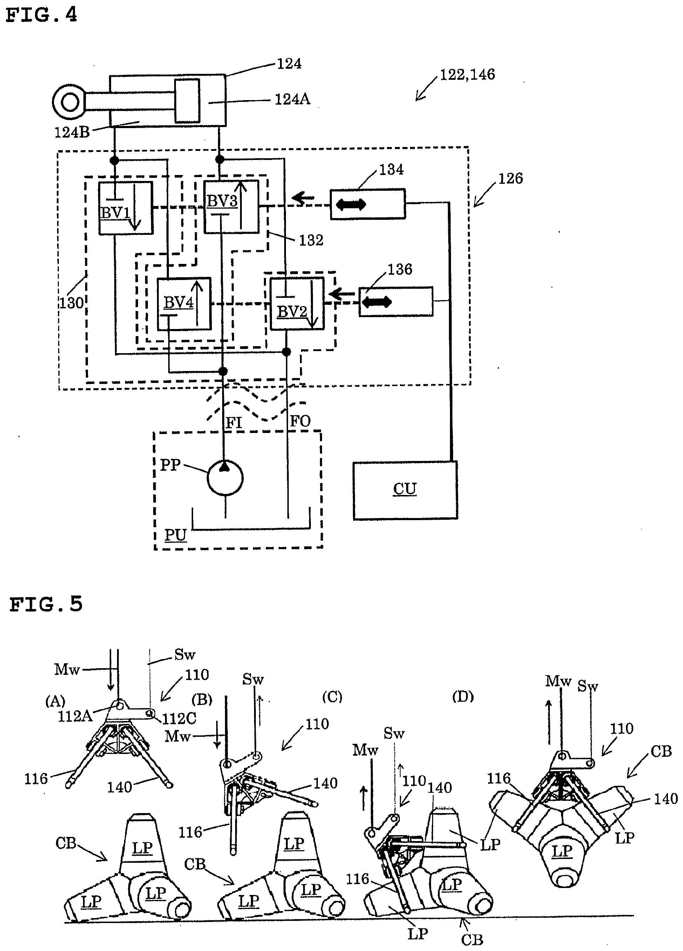

FIG. 5 is a diagram showing a procedure for grabbing and moving a wave dissipating block using the wave dissipating block grapple-machine of FIG. 2 (FIG. 5(A) is a diagram where the wave dissipating block grapple-machine is lowered toward the wave dissipating block, FIG. 5(B) is a diagram where the wave dissipating block grapple-machine is tilted with respect to the wave dissipating block, FIG. 5(C) is a diagram where the wave dissipating block is grabbed by the wave dissipating block grapple-machine, and FIG. 5(D) is a diagram where the wave dissipating block is hung by the wave dissipating block grapple-machine).
FIG. 6 is a flowchart for describing the procedure shown in FIG. 5.

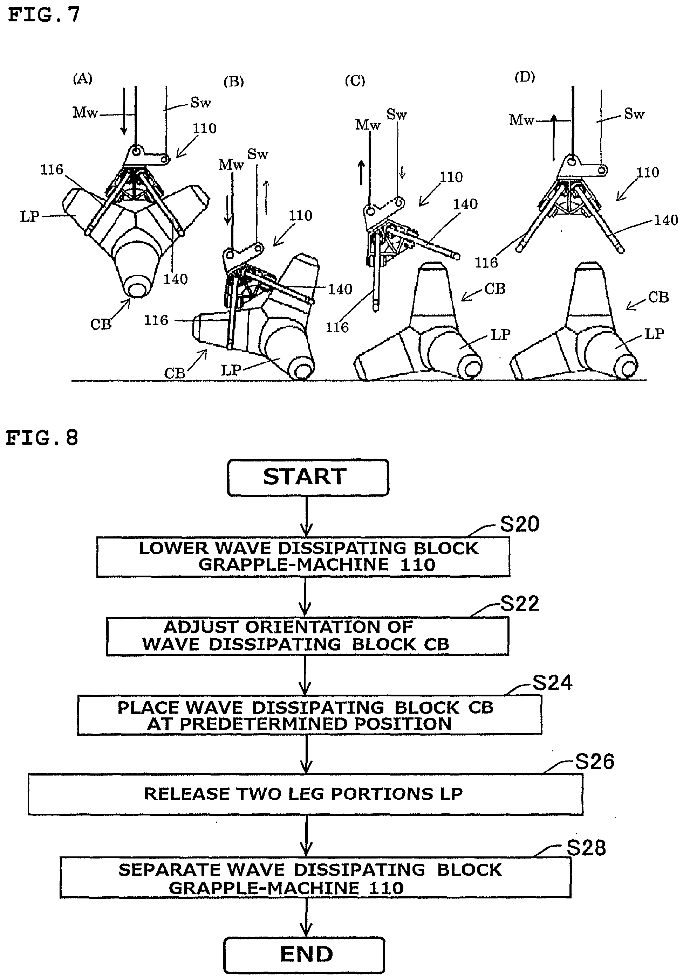

FIG. 7 is a diagram showing a procedure for placing a wave dissipating block at a predetermined position using the wave dissipating block grapple-machine of FIG. 2 (FIG. 7(A) is a diagram where the wave dissipating block grapple-machine grabbing the wave dissipating block is lowered, FIG. 7(B) is a diagram where the wave dissipating block is tilted by the wave dissipating block grapple-machine, FIG. 7(C) is a diagram where the wave dissipating block is released and the wave dissipating block grapple-machine is lifted up, and FIG. 7(D) is a diagram where the orientation of the tilted wave dissipating block grapple-machine is corrected and the wave dissipating block grapple-machine is lifted up).
FIG. 8 is a flowchart for describing the procedure shown in FIG. 7.
FIG. 9 is a schematic diagram showing a work machine and a wave dissipating block grapple-machine according to a second embodiment of the present invention (FIG. 9(A) is a side view, and FIG. 9(B) is a perspective view).
FIG. 10 is a diagram showing a procedure for grabbing a wave dissipating block using the wave dissipating block grapple-machine of FIG. 9 (FIG. 10(A) is a diagram where the wave dissipating block grapple-machine is lowered toward the wave dissipating block, FIG. 10(B) is a diagram where the wave dissipating block grapple-machine is tilted with respect to the wave dissipating block, and FIG. 10 (C) is a diagram where the wave dissipating block is grabbed by the wave dissipating block grapple-machine).
FIG. 11 is a schematic diagram showing a work machine and a wave dissipating block grapple-machine according to a third embodiment of the present invention.
FIG. 12 is a diagram showing the wave dissipating block grapple-machine of FIG. 11 (FIG. 12(A) is a side view, and FIG. 12(B) is a perspective view).
FIG. 13 is a diagram showing a procedure for grabbing a wave dissipating block using the wave dissipating block grapple-machine of FIG. 12 (FIG. 13 (A) is a diagram where the wave dissipating block grapple-machine is lowered toward the wave dissipating block, FIG. 13(B) is a diagram where the wave dissipating block grapple-machine is tilted with respect to the wave dissipating block, and FIG. 13 (C) is a diagram where the wave dissipating block is grabbed by the wave dissipating block grapple-machine).

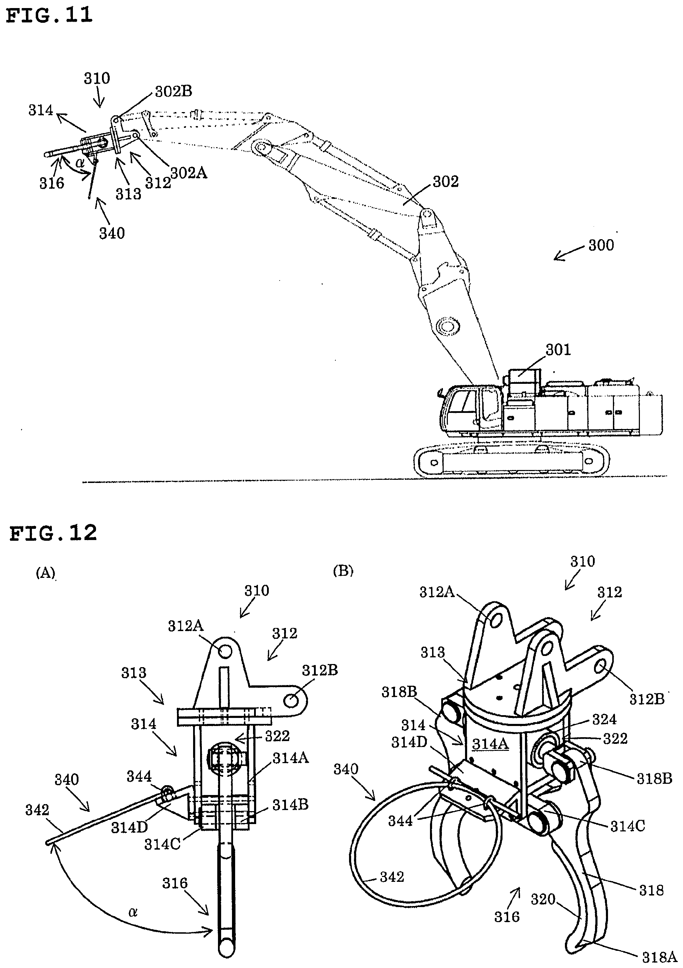

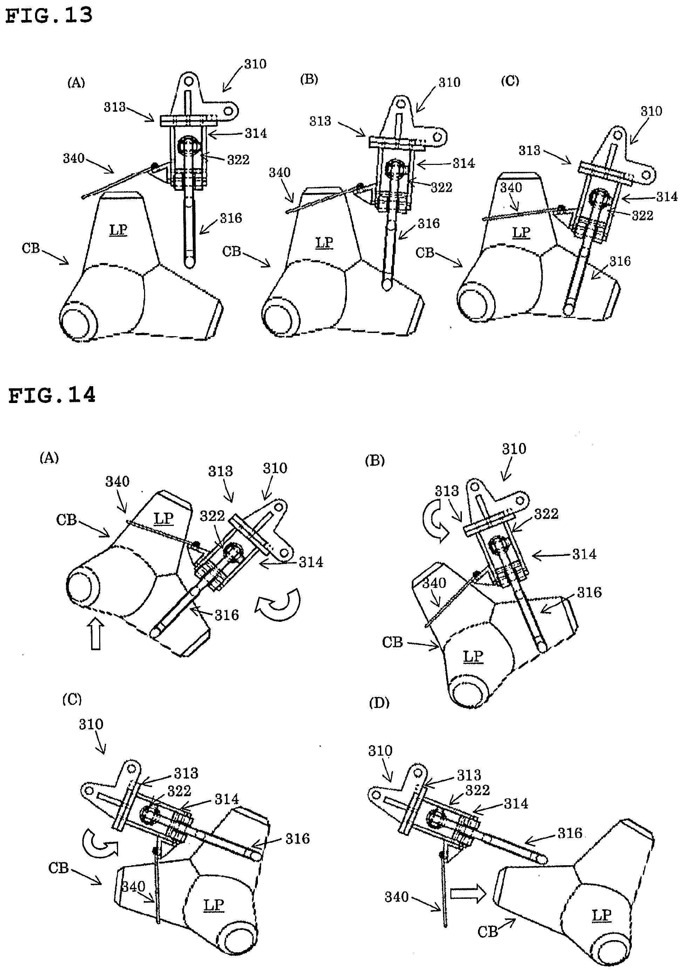

FIG. 14 is a diagram showing a procedure for projecting a wave dissipating block toward a predetermined position using the wave dissipating block grapple-machine of FIG. 12 (FIG. 14(A) is a diagram where the wave dissipating block grapple-machine grabbing the wave dissipating block is rotated, FIG. 14 (B) is a diagram where the wave dissipating block is rotated to the other side using the wave dissipating block grapple-machine, FIG. 14(C) is a diagram where one of the leg portions of the wave dissipating block is released, and FIG. 14(D) is a diagram where the rotation of the wave dissipating block grapple-machine is controlled to fully release the wave dissipating block).
FIG. 15 is a flowchart for describing the procedure shown in FIG. 14.
FIG. 16 is a block diagram for describing a driving mechanism according to a comparative example.

### Description of Embodiments

An example of a first embodiment of the present invention will be described in detail below with reference to FIGs. 1 to 8.

A work machine 100, a wave dissipating block grapple-machine 110, and a wave dissipating block CB will initially be outlined with reference to FIG. 1.

As shown in FIG. 1, the work machine 100 is a crane truck with outriggers (may be an excavator, a crane mechanism installed on a barge, etc.), for example, and includes an arm body 102, which is capable of changing its tilt angle, on a rotatable main body unit 101. The arm body 102 is an extendable and contractible telescopic boom (may be a lattice boom), for example. A main wheel 104 is located at the end of the arm body 102, and a main wire Mw hanging the wave dissipating block grapple-machine 110 is engaged with the main wheel 104 (the wave dissipating block grapple-machine 110 can thus rotate accordingly about the main wire Mw) . Although not shown, a sub wheel is located at the end of the arm body 102, and a sub wire Sw for changing the orientation of the wave dissipating block grapple-machine 110 is engaged with the sub wheel. Specifically, reducing the feed lengths of the main wire Mw and the sub wire Sw lifts up the wave dissipating block grapple-machine 110. Increasing the feed lengths of the main wire Mw and the sub wire Sw lowers the wave dissipating block grapple-machine 110. A relay wheel 106 that feeds fluid hoses (connected to fluid pressure inlets FI and fluid discharge outlets FO of driving mechanisms 126 to be described below) and electric cables (extending from a control unit CU, to be described below, to a first electric linear motion mechanism 134 and a second electric linear motion mechanism 136) for driving the wave dissipating block grapple-machine 110 is rotatably supported on the arm body 102.

As shown in FIG. 1, the wave dissipating block CB is an oddly shaped concrete block having four leg portions LP extending from the barycentric position of a regular tetrahedron toward the respective vertexes, i.e., extending in respective different directions. Wave dissipating blocks CB typically do not include reinforcing bars in view of protection against corrosive degradation. Wave dissipating blocks CB can thus be broken into large pieces under local stress, and therefore need to be grabbed, transported, and installed with great care and precision without much stress, due partly to their large size. There are a total of 18 types or sizes of wave dissipating blocks CB in general use, ranging from 0.5 tons in weight (90 cm in height) to 80 tons (5 m in height), with leg portions LP having substantially circular cross sections. Most wave dissipating blocks CB used on rivers are 10 tons or less (for example, 6.3 tons in weight and approximately 2 m in height). A desired number of wave dissipating blocks CB of desired sizes are normally produced using forms near the construction site.

As shown in FIG. 1, the wave dissipating block grapple-machine 110 is supported by the work machine 100, and can grab a wave dissipating block CB. As shown in FIGs. 2(A) and 2(B), the wave dissipating block grapple-machine 110 includes an attachment unit 112, a base member 114, a first holding mechanism 116, and a second holding mechanism 140. The first holding mechanism 116 and the second holding mechanism 140 radially hold respective two of the four leg portions LP of the wave dissipating block CB. The base member 114 is rotatably supported by the work machine 100, and supports the first holding mechanism 116 and the second holding mechanism 140. In the present embodiment, wave dissipating blocks CB are assumed to be ones mainly usable on rivers. For example, for a wave dissipating block CB of 6.3 tons in weight and approximately 2 m in height, the wave dissipating block grapple-machine 110 is less than 4 tons in weight and less than 2 m in height (for example, for a wave dissipating block CB of 16 tons in weight and approximately 3 m in height, the wave dissipating block grapple-machine 110 can be configured to be at most less than 10 tons in weight and less than 3 m in height). Different wave dissipating block grapple-machines 110 are desirably used for respective sizes of wave dissipating blocks CB, whereas one size of wave dissipating block grapple-machine 110 can grab three or more adjoining sizes of wave dissipating blocks CB (for example, a wave dissipating block grapple-machine 110 intended for a wave dissipating block CB of 6.3 tons (2 m in height) can move five different sizes of wave dissipating blocks CB, including 3.2 tons (1.6m in height), 4 tons (1.8 m in height), 5 tons (1.9 m in height), 6 tons (2 m in height), and 8 tons (2.3 m in height)).

Next, each of the components will be described in detail.

As shown in FIGs. 1, 2(A), and 2(B), the attachment unit 112 is coupled to the base member 114, and has a main attachment hole 112A to be supported by the main wire Mw and a sub attachment hole 112C to be supported by the sub wire Sw. The main attachment hole 112A is located on an extension of the main wire Mw to roughly overlap the barycenter of the wave dissipating block grapple-machine 110. The sub attachment hole 112C is located at an end of an extending portion 112B extending in a direction orthogonal to the main wire Mw. The orientation of the wave dissipating block grapple-machine 110 can thus be changed by changing the feed length of the sub wire Sw (to decrease) with respect to that of the main wire Mw (in other words, the base member 114 is equipped with a changing member (i.e., extending portion 112B) for changing the positional relationship between the first holding mechanism 116 and the second holding mechanism 140 when the base member 114 is rotatably supported by the work machine 100).

As shown in FIGs. 2(A) and 2(B), the base member 114 has a symmetrical structure because the first holding mechanism 116 and the second holding mechanism 140 have the same shape. The base member 114 includes a connection portion 114A, outside portions 114B, a split center portion 114C, split support portions 114D, rotation support portions 114E, and pressure portions 114F. The connection portion 114A is a plate-like member coupled to the attachment unit 112. The outside portions 114B are plate-like members integrally disposed on both ends of the connection portion 114A in respective oblique directions (for example, tilted at approximately 55° downward from a plane where the connection portion 114A is). The split center portion 114C and the two split support portions 114D are plate-like members integrally configured inside and orthogonal to the connection portion 114A and the two outside portions 114B, respectively. The split center portion 114C and the two split support portions 114D are also integrally connected. As shown in FIG. 2(B), the connection portion 114A, the outside portions 114B, the split center portion 114C, and the split support portions 114D constitute two symmetrical cylindrical shapes surrounding linear motion mechanisms 124 and driving mechanisms 126 (in other words, the linear motion mechanisms 124 and the driving mechanisms 126 are built in the wave dissipating block grapple-machine 110). The base member 114 thus has a structure less deformable even under a large external force. The rotation support portions 114E are integrated with the split support portions 114D, and rotatably support a pair of first holding members 118 and a pair of second holding members 142 on planes parallel to the outside portions 114B. With such a configuration, the cross section of the part of the leg portion LP held by the first holding mechanism 116 and the cross section of the part of the leg portion LP held by the second holding mechanism 140 both are flat planes, which intersect at approximately 70° (angle α), i.e., an acute angle. Each rotation support portion 114E rotatably supports the pair of first holding members 118 (the pair of second holding members 142) by sandwiching and pivotally supporting the pair of first holding members 118 (the pair of second holding members 142) with the pressure portion 114F located on the outer side.

As shown in FIGs. 2(A) and 2(B), the first holding mechanism 116 includes the pair of first holding members 118 and a first driving device 122. As shown in FIGs. 2(A) and 2(B), the second holding mechanism 140 is configured to be the same as the first holding mechanism 116, and includes the pair of second holding members 142 and a second driving device 146.

As shown in FIG. 2(A), the pair of first holding members 118 is rotatably supported by the base member 114, and can grab one of the two leg portions LP by bringing their end portions 118A close to each other. As shown in FIG. 2(A), the first holding members 118 are plate-like members shaped so that the portions that make contact with the leg portion LP are curved to the shape of the leg portion LP. Contact portions 120 to direct make contact with the leg portion LP are provided with bar-like members having a substantially circular cross-sectional shape (the bar-like members may be formed of a cushioning material, such as rubber, and are replaceable). The pair of first holding member 118 can thus hold the leg portion LP without applying a local stress to the wave dissipating block CB and can prevent breakage of the leg portion LP, because of the edgeless structure. Upper ends 118B of the pair of first holding members 118 are both directly coupled to the ends of a linear motion mechanism 124 (to be described below). The pair of second holding members 142 has the same configuration as that of the pair of first holding members 118, and a description thereof will thus be omitted. In particular, end portions 142A have the same configuration as that of the end portions 118A, and contact portions 144 have the same configuration as that of the contact portions 120.

As shown in FIGs. 2 (A) and 2(B), the first driving device 122 is configured to drive the pair of first holding members 118 to rotate. Specifically, the first driving device 122 includes the linear motion mechanism 124 and the driving mechanism 126 (the second driving device 146 has the same configuration as that of the first driving device 122, and includes the linear motion mechanism 124 and the driving mechanism 126. A description of the second driving mechanism 146 will thus be omitted).

For example, as shown in FIG. 4, the linear motion mechanism 124 is a cylinder mechanism including two cylinder chambers 124A and 124B where fluid can flow into and that are separated by a piston. The upper ends 118B of the pair of first holding members 118 are directly coupled to the respective ends of the linear motion mechanism 124.

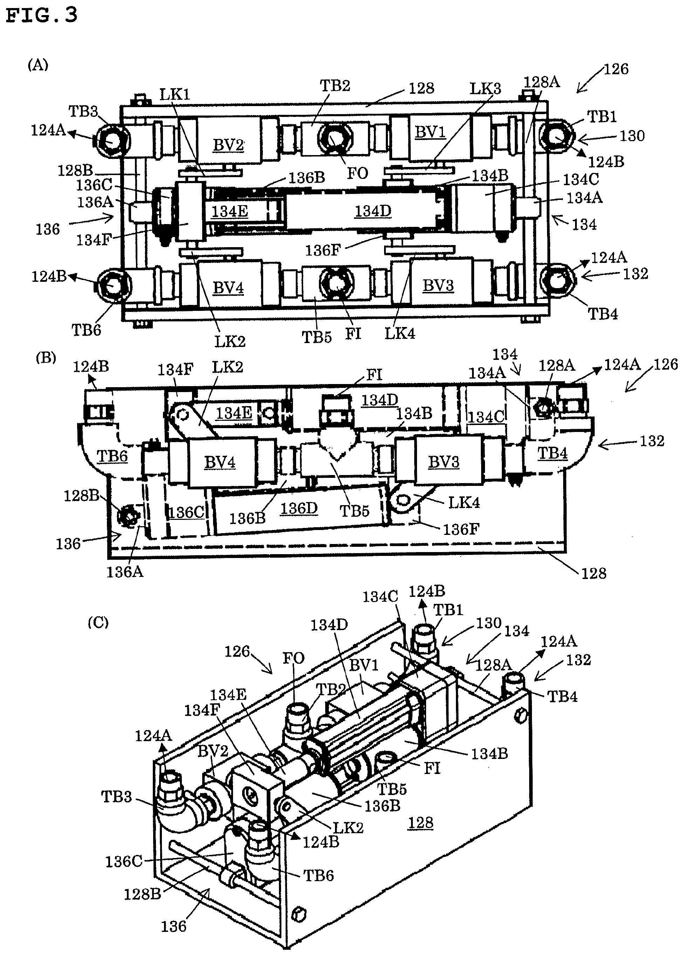

As shown in FIG. 2(B), the driving mechanism 126 is a mechanism that is built in the wave dissipating block grapple-machine 110 and drives one linear motion mechanism 124. As shown in FIGs. 3(A), 3(B), and 3(C), the driving mechanism 126 includes a first switching channel member 130, a second switching channel member 132, an electric linear motion mechanism 134, and a second electric linear motion mechanism 136. The first switching channel member 130 and the second switching channel member 132 are both connected to the two cylinder chambers 124A and 124B and each include two on-off valves BV1 and BV2 (BV3 and BV4). The on-off valves BV1 to BV4 are simple structured valve cocks, such as ball valves, and can be fully closed to prevent the fluid in the two cylinder chambers 124A and 124B from decreasing and can fix the operation of the linear motion mechanism 124 (in other words, the driving mechanism 126 is configured to include the on-off valves BV1 to BV4 that can prevent the fluid in the two cylinder chambers 124A and 124B from decreasing and can fix the operation of the linear motion mechanism 124).

More specifically, as shown in FIGs. 3(A), 3(B), and 3(C), the first switching channel member 130 includes two L-shaped pipes TB1 and TB3, the two on-off valves BV1 and BV2, and a T-shaped pipe TB2. In the first switching channel member 130, the L-shaped pipe TB1 is connected to one end of the on-off valve BV1. One end of the T-shaped pipe TB2 having a fluid discharge outlet FO is connected to the other end of the on-off valve BV1. Moreover, one end of the on-off valve BV2 is connected to the other end of the T-shaped pipe TB2. The L-shaped pipe TB3 is connected to the other end of the on-off valve BV2. In other words, as shown in FIG. 4, the first switching channel member 130 is configured so that the fluid discharge outlet FO for discharging the fluid from the two cylinder chambers 124A and 124B is disposed between the two on-off valves BV1 and BV2.

As shown in FIGs. 3(A), 3(B), and 3(C), the second switching channel member 132 includes two L-shaped pipes TB4 and TB6, the two on-off valves BV3 and BV4, and a T-shaped pipe TB5. In the second switching channel member 132, the L-shaped pipe TB4 is connected to one end of the on-off valve BV3. One end of the T-shaped pipe TB5 having a fluid pressure inlet FI is connected to the other end of the on-off valve BV3. Moreover, one end of the on-off valve BV4 is connected to the other end of the T-shaped pipe TB5. The L-shaped pipe TB6 is connected to the other end of the on-off valve BV4. In other words, as shown in FIG. 4, the second switching channel member 132 is configured so that the fluid pressure inlet FI for feeding the fluid into the two cylinder chambers 124A and 124B from a pump PP is disposed between the two on-off valves BV3 and BV4.

As shown in FIGs. 3(A) to 3(C), the first electric linear motion mechanism 134 includes a support unit 134A, a motor unit 134B, a connection unit 134C, a fixed unit 134D, a movable unit 134E, and a coupling unit 134F. The support unit 134A has a not-shown through hole, and is disposed on an end of the connection unit 134C. The first electric linear motion mechanism 134 is thereby pivotally supported by a rod 128A attached to a U-shaped casing 128. The motor unit 134B is an electric motor, for example. The connection unit 134C accommodates an encoder, for example. The fixed unit 134D accommodates a ball screw. The rotation of the electric motor is read by the encoder, and the rotation is converted into that of the ball screw. The movable unit 134E can be linearly moved by the rotation of the ball screw. The coupling unit 134F is attached to the movable unit 134E, and simultaneously rotates lever members LK1 and LK2. The lever members LK1 and LK2 are coupled to the on-off valves BV2 and BV4, respectively, and can simultaneously open and close the on-off valves BV2 and BV4 by their rotary motion.

The second electric linear motion mechanism 136 has the same configuration as that of the first electric linear motion mechanism 134. As shown in FIG. 3(A) to 3(C), the second electric linear motion mechanism 136 includes a support unit 136A, a motor unit 136B, a connection unit 136C, a fixed unit 136D, a movable unit (not shown), and a coupling unit 136F. The second electric linear motion mechanism 136 is pivotally supported by a rod 128B attached to the U-shaped casing 128. The coupling unit 136F simultaneously rotates lever members LK3 and LK4. The lever members LK3 and LK4 are coupled to the on-off valves BV1 and BV3, respectively, and can simultaneously open and close the on-off valves BV1 and BV3 by their rotary motion.

In other words, the driving mechanism 126 can be said to include the following: the first electric linear motion mechanism 134 that simultaneously opens and closes one of the two on-off valves BV1 and BV2 in the first switching channel member 130, here being BV2, and one of the two on-off valves BV3 and BV4 in the second switching channel member 132, here being BV4; and the second electric linear motion mechanism 136 that simultaneously opens and closes the other on-off valves BV1 and BV3 in the first switching channel member 130 and the second switching channel member 132.

As can be seen from FIGs. 3(A) to 3(C) and 4, the L-shaped pipes TB1 and TB3 communicate with the cylinder chambers 124B and 124A, respectively. The fluid discharge outlet FO of the T-shaped pipe TB2 is connected to a pipe returning to a pump unit PU (the fluid may be oil or water. If the fluid is water and the water may be drained away, the pipe may be unconnected). In the present embodiment, the wave dissipating block grapple-machine 110 includes two built-in linear motion mechanisms 124 and two built-in driving mechanisms 126. By contrast, the control unit CU for controlling the first electric linear motion mechanism 134 and the second electric linear motion mechanism 136 is located outside. The pump unit PU is also located outside, and is shared by the first driving device 122 and the second driving device 146 by branching the flow channels.

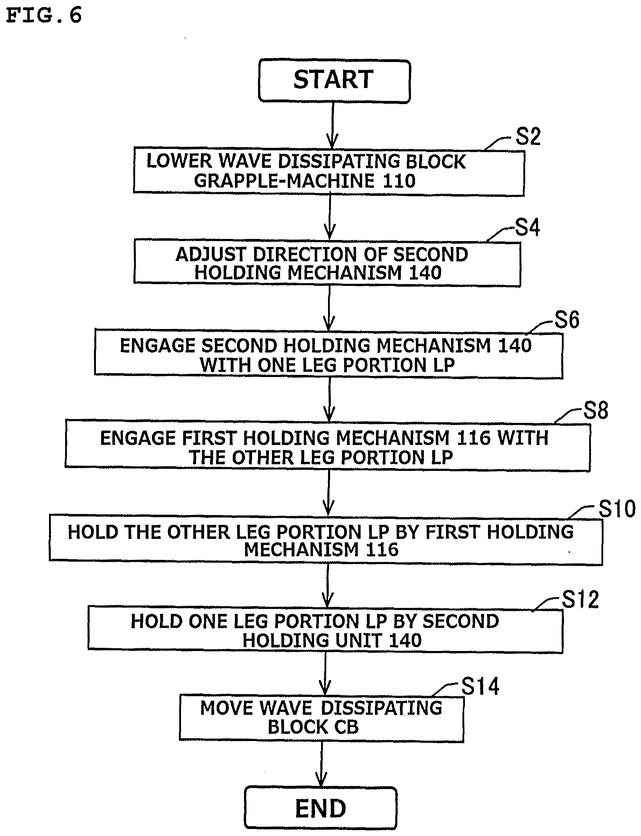

Next, a procedure for grabbing and moving a wave dissipating block CB using the wave dissipating block grapple-machine 110 according to the present embodiment will be described with reference to FIGs. 5(A) to 5(D) and 6.

Using the work machine 100, the wave dissipating block grapple-machine 110 is lowered from above the wave dissipating block CB (FIG. 5(A), step S2 in FIG. 6).

Next, if needed, the orientation of the wave dissipating block grapple-machine 110 is changed to adjust the direction of the second holding mechanism 140 in advance by adjusting the feed length of the sub wire Sw with respect to that of the main wire Mw on the basis of the direction of one of two leg portions LP (FIG. 5(B), step S4 in FIG. 6). The pair of second holding members 142 is then somewhat closed so that the leg portion LP can be grabbed when the wave dissipating block grapple-machine 110 is lowered.

Next, the wave dissipating block grapple-machine 110 is lowered so that the second holding mechanism 140 is engaged with the one leg portion LP (step S6 in FIG. 6). In this state, instead of being a firmly grabbing state, the distance between the pair of second holding members 142 is greater than the diameter of the leg portion LP so that the wave dissipating block grapple-machine 110 can rotate about the leg portion LP.

Next, using the work machine 100, the first holding mechanism 116 is brought close to and engaged with the other of the two leg portions LP on the basis of the state of engagement of the second holding mechanism 140 (step S8 in FIG. 6). In other words, the work machine 100 is operated to rotate and adjust the wave dissipating block grapple-machine 110 about the one leg portion LP so that the pair of first holding members 118 of the first holding mechanism 116 can grab the other leg portion LP in a plan view. In such a state, the wave dissipating block grapple-machine 110 is lowered further to bring the pair of first holding members 118 of the first holding mechanism 116 closer so that the first holding members 118 make contact with the other leg portion LP.

Next, the other leg portion LP is held by the first holding mechanism 116 (step S10 in FIG. 6). The one leg portion LP is held by the second holding mechanism 140 (step S12 in FIG. 6). In other words, the first holding mechanism 116 and the second holding mechanism 140 hold respective different leg portions LP (FIG. 5(C)). Note that the first holding mechanism 116 and the second holding mechanism 140 may hold the leg portions LP in a reverse order.

Using the work machine 100, the wave dissipating block grapple-machine 110 (FIG. 5(D)) is then lifted up, and the feed length of the sub wire Sw is adjusted to remove the tilt of the wave dissipating block grapple-machine 110. The wave dissipating block CB is then moved in a stable state that the two leg portions LP other than the held two were directed downward (step S14 in FIG. 6).

Next, a procedure for placing a wave dissipating block CB at a predetermined position using the wave dissipating block grapple-machine 110 will be described with reference to FIGs. 7 (A) to 7(D) and FIG. 8.

Initially, using the work machine 100, the wave dissipating block grapple-machine 110 grabbing the wave dissipating block CB is moved to a position above a predetermined position.

Next, using the work machine 100, the wave dissipating block CB is lowered to the predetermined position (FIG. 7(A), step S20 in FIG. 8). Here, the wave dissipating block grapple-machine 110 is tilted to adjust the orientation of the wave dissipating block CB in advance on the basis of the state of the predetermined position (step S22 in FIG. 8). The orientation is adjusted by adjusting the feed length of the sub wire Sw with respect to that of the main wire Mw as described above. After the orientation adjustment, the wave dissipating block CB is placed (FIG. 7(B), step S24 in FIG. 8).

Next, the first holding mechanism 116 releases the one leg portion LP, and the second holding mechanism 140 releases the other leg portion LP (step S26 in FIG. 8).

Using the work machine 100, the wave dissipating block grapple-machine 110 is then lifted up so that the wave dissipating block grapple-machine 110 is separated from the wave dissipating block CB (step S28 in FIG. 8).

From when the two leg portions LP are released to when the wave dissipating block grapple-machine 110 is lifted up to an appropriate height, the orientation of the wave dissipating block grapple-machine 110 is maintained to follow that of the wave dissipating block CB (FIG. 7(C)). The feed length of the sub wire Sw is then adjusted to remove the tilt of the wave dissipating block grapple-machine 110 (FIG. 7(D)).

As described above, in the present embodiment, the first holding mechanism 116 and the second holding mechanism 140 that radially hold respective two of the four leg portions LP of a wave dissipating block CB having the four leg portions LP extending in respective different directions are provided. The wave dissipating block CB can thus be grabbed more reliably since the number of wave dissipating blocks CB in an orientation where two leg portions LP can be grabbed is considered to be greater than that of wave dissipating blocks CB in an orientation where the vicinity of the barycentric portion can be grabbed as described in the conventional art. The wave dissipating block CB grabbed can be hung in a well-balanced state and can be stably transported since two leg portions LP are directed downward. Moreover, the first holding mechanism 116 and the second holding mechanism 140 can be configured to only radially hold respective two leg portions LP, and a holding mechanism as large as to embrace an entire leg portion LP is therefore not needed.

For example, according to the conventional art, a grapple-machine for a wave dissipating block of approximately 16 tons in weight and approximately 3 m in height has a weight of approximately 12 tons and a height of approximately 6 m. By contrast, the wave dissipating block grapple-machine 110 according to the present embodiment can be configured to be at most less than 10 tons in weight and less than 3 m in height.

In the present embodiment, the first holding mechanism 116 and the second holding mechanism 140 are configured to be the same as each other, and the first holding mechanism 116 and the second holding mechanism 140 are configured to be controlled independently of each other. This can promote cost reduction by making common members for the first holding mechanism 116 and the second holding mechanism 140. Since the first holding mechanism 116 and the second holding mechanism 140 are controlled independent of each other, two leg portions LP can be held and released at an optimum timing. This can facilitate the installation and orientation adjustment of wave dissipating blocks CB.

Moreover, in the present embodiment, the cross section of the part of the leg portion LP held by the first holding mechanism 116 and the cross section of the part of the leg portion LP held by the second holding mechanism 140 are both flat planes. The reaction force to the force applied to the leg portion LP by the first holding mechanism 116 thus acts only on the first holding mechanism 116. The reaction force to the force applied to the leg portion LP by the second holding mechanism 140 acts only on the second holding mechanism 140. In other words, the holding force of the first holding mechanism 116 on the leg portion LP does not depend on the second holding mechanism 140. The holding force of the second holding mechanism 140 on the leg portion LP does not depend on the first holding mechanism 116. The leg portions LP can thus be stably held despite the independent driving of the first holding mechanism 116 and the second holding mechanism 140.

In the present embodiment, the wave dissipating block CB is held by the pair of first holding members 118 and the pair of second holding members 142. Since the wave dissipating block CB is held by four members, stress acting on the wave dissipating block CB can be made smaller than that in the conventional art (where a wave dissipating block is held by three members). This can further reduce breakage of wave dissipating blocks CB.

In the present embodiment, the cross section of the part of the leg portion LP held by the first holding mechanism 116 and the cross section of the part of the leg portion LP held by the second holding mechanism 140 intersect at an acute angle (approximately 70°). As a result, the first holding mechanism 116 and the second holding mechanism 140 face the respective leg portions LP (intersecting at approximately 70°) of the wave dissipating block CB used in the present embodiment substantially at right angles. The members of the first holding mechanism 116 and the second holding mechanism 140 (i.e., the first holding members 118 and the second holding members 142) can thus be minimized in size and weight, and the leg portions LP can be held reliably and stably.

The cross section of the part of the leg portion LP held by the first holding mechanism and the cross section of the part of the leg portion LP held by the second holding mechanism are not limited thereto, and may be other than flat planes. The first holding mechanism and the second holding mechanism can be any holding mechanisms that can hold different leg portions LP independently. The cross section of the part of the leg portion LP held by the first holding mechanism and the cross section of the part of the leg portion LP held by the second holding mechanism do not need to intersect at approximately 70° either. The angle may be an acute angle greater than 0° and less than 90°. Even in such a case, a wave dissipating block CB too large and too heavy for the size of the wave dissipating block grapple-machine can be prevented from being grabbed. This can preclude the dropping of the wave dissipating block CB, a breakdown of the wave dissipating block grapple-machine, etc. The cross section of the part of the leg portion LP held by the first holding mechanism and the cross section of the part of the leg portion LP held by the second holding mechanism may intersect at 0° or at 90° or more. The reason is that the wave dissipating block CB can be grabbed so long as the first holding unit and the second holding unit can independently hold different leg portions LP as described above.

In the present embodiment, the base member 114 is equipped with the changing member (extending portion 112B) for changing the positional relationship between the first holding mechanism 116 and the second holding mechanism 140 when rotatably supported by the work machine 100. The orientation of the wave dissipating block grapple-machine 110 can thus be changed by changing the feed length of the sub wire Sw with respect to that of the main wire Mw. As a result, the wave dissipating block CB can be grabbed and hung by changing the orientation of the wave dissipating block grapple-machine 110 on the basis of the orientation of the wave dissipating block CB. Moreover, in placing the wave dissipating block CB at a predetermined position, the orientation of the wave dissipating block CB can be changed to a desired one before the wave dissipating block CB is placed. However, this method is not restrictive. A wave dissipating block CB may be moved using another work machine so that two leg portions LP can be easily grabbed, before the wave dissipating block CB is grabbed and transported. In transporting and placing a wave dissipating block CB at a predetermined position, the wave dissipating block CB may be once placed near the predetermined position and the orientation thereof can then be changed to a desired one using another work machine.

In the present embodiment, the first driving device 122 (second driving device 146) includes one linear motion mechanism 124 that is built in the wave dissipating block grapple-machine 110 and has respective ends of which the upper ends 118B (upper ends 142B) of the pair of first holding members 118 (pair of second holding members 142) are directly coupled. This can simplify the configuration of the first driving device 122 (second driving device 146). Suppose now that, in the process of bringing the pair of first holding members 118 (pair of second holding members 142) close to each other to hold a leg portion LP, either one of the pair of first holding members 118 (pair of second holding members 142) comes into contact with the leg portion LP. In such a case, the leg portion LP can be prevented from undergoing additional pressing force from the first holding member 118 (second holding member 142) being in contact therewith first until the first holding member 118 (second holding member 142) out of contact rotates alone to make contact with the leg portion LP. This can prevent the application of excessive stress to the leg portion LP, and can further reduce breakage of wave dissipating blocks CB. However, this is not restrictive. Two linear motion mechanisms may be used to rotate the respective first holding members (respective second holding members) independently. A single linear motion mechanism may be used to rotate the pair of first holding members (pair of second holding members) by the same angles.

In the present embodiment, the linear motion mechanism 124 is a cylinder mechanism including the two cylinder chambers 124A and 124B where fluid can flow in, which are separated by the piston. As compared to a case where the linear motion mechanism is configured as an electric linear motion mechanism, the pair of first holding members 118 (pair of second holding members 142) can therefore be rotated by a linear motion mechanism of small size and at low cost. However, this is not restrictive, and the linear motion mechanism may be configured as an electric linear motion mechanism.

In the present embodiment, the first driving device 122 and the second driving device 146 each further include a driving mechanism 126 that is built in the wave dissipating block grapple-machine 110 and drives a linear motion mechanism 124. The driving mechanism 126 includes the on-off valves BV1 to BV4 that can prevent the fluid in the two cylinders 124A and 124B from decreasing and fix the operation of the linear motion mechanism 124. Such a configuration can lock the position of the linear motion mechanism 124 (i.e., fix the states of the first holding member 118 and the second holding member 142) even if the piping extending from the pump unit PU located outside the wave dissipating block grapple-machine 110 to the driving mechanism 126 is disconnected and the fluid flows out. In other words, even in such a case, unforeseen accidents like dropping of the wave dissipating block CB from the wave dissipating block grapple-machine 110 and a change in the orientation of the wave dissipating block CB can be avoided. However, this is not restrictive, and the fluid pressure in the cylinder chambers may be stabilized directly from outside the wave dissipating block grapple-machine without a built-in driving mechanism.

In the present embodiment, the driving mechanism 126 includes the first switching channel member 130, the second switching channel member 132, the first electric linear motion mechanism 134, and the second electric linear motion mechanism 136. Here, the first switching channel member 130 and the second switching channel member 132 are configured to be the same as each other. The first electric linear motion mechanism 134 and the second electric linear motion mechanism 136 simultaneously open and close the on-off valves BV1 to BV4 of the first switching channel member 130 and the second switching channel member 132. The driving mechanism 126 can thus be simplified in configuration and control and can reduce cost.

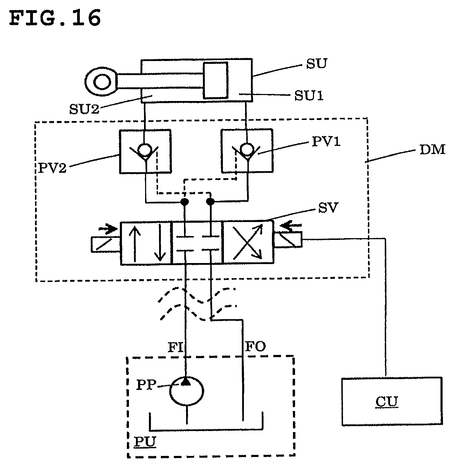

FIG. 16 shows a driving mechanism DM for comparative purposes. This driving mechanism DM includes two pilot-controlled check valves PV1 and PV2, and a solenoid valve SV. A linear motion mechanism SU shown in FIG. 16 includes two cylinder chambers SU1 and SU2. The two pilot-controlled check valves PV1 and PV2 are check valves that are coupled to the cylinder chambers SU1 and SU2, and prevent the fluid from flowing out, starting at a time when the amounts of fluid in the respective cylinder chambers are set. The two pilot-controlled check valves PV1 and PV2 are check valves that, if the fluid pressure (pilot pressure) in one cylinder chamber SU1 (or SU2) increases, let the fluid flow out of the other cylinder chamber SU2 (or SU1). The two pilot-controlled check valves PV1 and PV2 are both connected to the solenoid valve SV. The solenoid valve SV is a four-way valve, for example, and switches the pressure feed direction and discharge direction of the fluid using electromagnetic force. A pump unit PU is connected to the solenoid valve SV, and is intended to pressure feed the fluid to the cylinder chambers SU1 and SU2. A control unit CU is intended to control the solenoid valve SV. All the components are installed outside (on the ground).

As described above, the driving mechanism DM includes the two pilot-controlled check valves PV1 and PV2 and the solenoid valve SV, which are complicated in configuration and expensive. The combination of the four simple general-purpose on-off valves (valve cocks such as ball valves) BV1 to BV4, the first electric linear motion mechanism 134, and the second electric linear motion mechanism 136 as in the present embodiment can make the control simpler and cost lower than with the driving mechanism DM. Note that the driving mechanism DM can use sequence valves and the like, which again are more expensive than the simple general-purpose on-off valves BV1 to BV4 used in the present embodiment.

The driving mechanism DM is also configured to be able to lock the position of the linear motion mechanism SU even if the cables or piping extending to outside the driving mechanism DM are disconnected. If the driving mechanism DM is used instead of the driving mechanism 126, unforeseen accidents like dropping of the wave dissipating block CB from the wave dissipating block grapple-machine 110 and a change in the orientation of the wave dissipating block CB can thus be avoided as well.

In the present embodiment, the fluid is oil or water. If the fluid is oil, the pump unit PU of the work machine 100 can be used. However, it is preferable to provide another work machine and use its pump unit PU since the operation of the work machine 100 will not be affected by the operation of the wave dissipating block grapple-machine 110 (basically, pump units generating hydraulic pressure are less common). If the fluid is water, a water-suction pump unit PU can be used. Here, the greater the size of the pump unit PU is, the higher the discharge performance is and the more quickly the first holding mechanism 116 and the second holding mechanism 140 can be operated. However, a small-sized general-purpose pump unit may be used. The reason is that the object to be grabbed is a heavy wave dissipating block CB, and for the sake of careful operation, the operation speed of the first holding mechanism 116 and the second holding mechanism 140 may preferably be not so high. An engine-driven pump unit PU does not need an additional power supply and is less limited in use location. If the fluid is water, such a pump unit PU can be readily prepared. Moreover, the procurement, leakage, and discharge of water are less likely to matter since wave dissipating blocks CB are used in watery places.
Note that the fluid is not limited thereto, and air and the like may be used as the fluid.

Consequently, according to the present embodiment, a small-sized lightweight wave dissipating block grapple-machine 110 and a wave dissipating block moving method capable of grabbing and moving a wave dissipating block CB safely and more reliably without a dangerous manual slinging operation can be provided. In other words, the wave dissipating block grapple-machine 110 can be manufactured at lower cost than that in the conventional art, and can be transported, installed, and used easily. For example, the wave dissipating block grapple-machine 110 can quickly and reliably move wave dissipating blocks CB during emergency operations in fear of collapsing river banks and the like.

While the present invention has been described in conjunction with the first embodiment, the present invention is not limited to the first embodiment. It will be understood that improvements and design changes can be made without departing from the gist of the present invention.

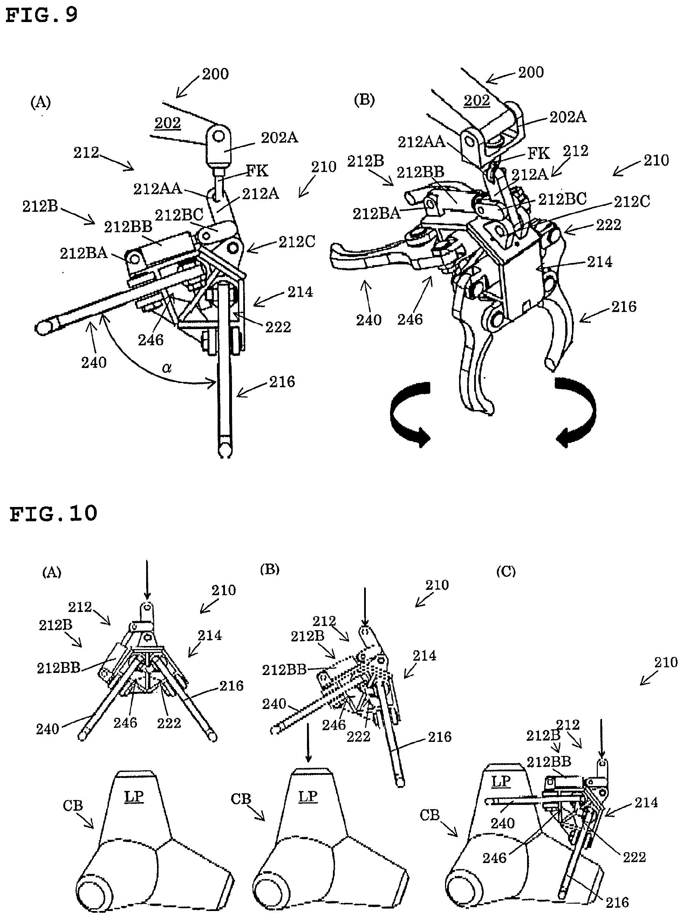

For example, in the first embodiment, the orientation of the wave dissipating block grapple-machine 110 is changed by adjusting the feed length of the sub wire Sw. However, the present invention is not limited thereto. For example, FIGs. 9(A), 9(B), 10(A), 10(B), and 10(C) show a second embodiment. The second embodiment is configured so that the sub wire Sw is not needed. The second embodiment will now be described. Differences from the first embodiment are in the configuration and operation of a work machine 200 and an attachment unit 212. The other components are therefore denoted by reference numerals with the same last two digits, and a description thereof will basically be omitted.

In the present embodiment, the work machine 200 is a backhoe with a foldable arm body 202 (having a configuration such as shown in FIG. 11 of a third embodiment to be described below), for example. As shown in FIGs. 9(A) and 9(B), a U-shaped rotation support unit 202A is rotatably supported at the end of the arm body 202. A hook FK is also rotatably supported by the rotation support unit 202A. The hook FK is configured to directly support the attachment unit 212.

A wave dissipating block grapple-machine 210 has a similar configuration to that in the first embodiment. As shown in FIGs. 9(A) and 9(B), the wave dissipating block grapple-machine 210 includes the attachment unit 212, a base member 214, a first holding mechanism 216, and a second holding mechanism 240 (driving mechanisms are omitted in FIG. 9(A)). The attachment unit 212 includes a rotation support portion 212A, an orientation changing unit 212B, and a rotating portion 212C. The rotation support portion 212A is a plate-like member having a main attachment hole 212AA in its upper end, and rotatably supports the rotating portion 212C. The hook FK is engaged with the main attachment hole 212AA. The orientation changing unit 212B includes two coupling units 212BA and 212BC and a cylinder unit 212BB. The coupling unit 212BA is attached to an outer part of the base member 214, and the coupling unit 212BC is rotatably coupled to the rotation support portion 212A. The cylinder unit 212BB is rotatably supported by the two coupling units 212BA and 212BC. As a result, the extension and contraction of the cylinder unit 212BB changes the coupling angle of the rotation support portion 212A to the rotating portion 212C (in other words, even in the present embodiment, the base member 214 is equipped with a changing member (orientation changing unit 212B) for changing the positional relationship between the first holding mechanism 216 and the second holding mechanism 240 when rotatably supported by the work machine 200). The cylinder unit 212BB is driven by hydraulic pressure supplied from the work machine 200.

Next, a procedure for grabbing and moving a wave dissipating block CB using the wave dissipating block grapple-machine 210 according to the present embodiment will be described with reference to FIGs. 10(A) to 10(C).

Using the work machine 200, the wave dissipating block grapple-machine 210 is lowered from above the wave dissipating block CB (FIG. 10(A)).

Next, if needed, the orientation of the wave dissipating block grapple-machine 210 is changed to adjust the direction of the second holding mechanism 240 in advance by adjusting the extension and contraction state of the cylinder unit 212BB on the basis of the direction of one of two leg portions LP (FIG. 10(B)). The pair of second holding members is then somewhat closed so that the leg portion LP can be grabbed when the wave dissipating block grapple-machine 210 is lowered.

Next, the wave dissipating block grapple-machine 210 is lowered so that the second holding mechanism 240 is engaged with the one leg portion LP. Using the work machine 200, the first holding mechanism 216 is then brought close to and engaged with the other of the two leg portions LP on the basis of the state of engagement of the second holding mechanism 240.

Next, the other leg portion LP is held by the first holding mechanism 216. The one leg portion LP is held by the second holding mechanism 240 (FIG. 10(C)). Using the work machine 200, the wave dissipating block grapple-machine 210 is then lifted up to move the wave dissipating block CB.

In the aforementioned embodiments, the wave dissipating block grapple-machines 110 and 210 are configured to be hung on the work machines 100 and 200. However, the present invention is not limited thereto. For example, FIGs. 11 to 15 show a third embodiment. In the third embodiment, the wave dissipating block grapple-machine is attached to the arm body of the work machine so that the orientation of the wave dissipating block grapple-machine can be controlled. Moreover, the configuration of the second holding mechanism is modified. The third embodiment will now be described. Differences from the first and second embodiments are in the junction of a wave dissipating block grapple-machine 310 with a work machine 300 and the configuration and operation of the wave dissipating block grapple-machine 310 except for a first holding mechanism 316. The other components are therefore denoted by reference numerals with the same last two digits, and a description thereof will basically be omitted.

In the present embodiment, as shown in FIG. 11, the work machine 300 is a backhoe with a foldable arm body 302. The arm body 302 is swingably and rotatably supported by a main body unit 301. Like a normal work attachment (such as a cutter and a grapple), the wave dissipating block grapple-machine 310 is attached to and supported by a support shaft 302A and a link shaft 302B located at the end of the arm body 302. In other words, the wave dissipating block grapple-machine 310 is attached to the arm body 302 that can lift up and down the wave dissipating block grapple-machine 310 and control rotation and swing of the same.

As shown in FIGs. 12(A) and 12(B), the wave dissipating block grapple-machine 310 includes an attachment unit 312, a base member 314, the first holding mechanism 316, and a second holding mechanism 340. The first holding mechanism 316 and the second holding mechanism 340 radially hold respective two of four leg portions LP of a wave dissipating block CB. The base member 314 is rotatably supported by the work machine 300, and supports the first holding mechanism 316 and the second holding mechanism 340.

Initially, as shown in FIG. 11, the attachment unit 312 is coupled to the support shaft 302A and the link shaft 302B of the arm body 302. The attachment unit 312 is a member that changes the orientation of the wave dissipating block grapple-machine 310 on the basis of a change in the position of the link shaft 302B with respect to the support shaft 302A (in other words, even in the present embodiment, the base member 314 includes a changing member (attachment unit 312) for changing the positional relationship between the first holding mechanism 316 and the second holding mechanism 340 when rotatably supported by the work machine 300).

As shown in FIGs. 12(A) and 12(B), the base member 314 is rotatably supported by the attachment unit 312 via a rotation device 313. The rotation device 313 allows rotation depending on the balance of the weight of the base member 314 acting on the rotation device 313, but may include a driving unit that controls the rotation angle. The base member 314 includes a frame 314A, a rotation support portion 314B, a pressure portion 314C, and a second holding mechanism support portion 314D. The frame 314A is rotatably supported by the attachment unit 312 as a part of the rotation device 313, and configured to surround a linear motion mechanism 324 of the first holding mechanism 316 (the driving mechanism is omitted in FIG. 12(A)). The rotation support portion 314B is integrated with the frame 314A, and supports a pair of first holding members 318 rotatably on a plane parallel to the frame 314A. The cross section of the part of the leg portion LP held by the first holding mechanism 316 is thereby configured to be a flat plane. The rotation support portion 314B rotatably supports the pair of first holding members 318 by sandwiching and pivotally supporting the pair of first holding members 318 with the pressure portion 314C located on the outer side. The second holding mechanism support portion 314D is a member for attaching the second holding mechanism 340 to the frame 314A so that the angle between the second holding mechanism 340 and the pair of first holding members 318 is an acute angle (angle α is approximately 70°).

As shown in FIGs. 12 (A) and 12(B), the first holding mechanism 316 includes the pair of first holding members 318 and a first driving device 322. Since the first holding mechanism 316 has the same configuration as that in the first embodiment, a description thereof will be omitted.

The second holding mechanism 340 includes a ring member 342 having an adjustable inner diameter greater than or equal to a minimum outer diameter of a leg portion LP. For example, the ring member 342 is an annularly curved wire rope having a thickness of 1 cm or more (depending on the weight of the wave dissipating block CB). The ring member 342 is fixed onto the second holding mechanism support portion 314D by adjustment members (such as two U bolts) 344 (leg portions LP of several sizes of wave dissipating blocks CB can thus be held by changing the positions where the wire is supported by the adjustment members 344 to change the inner diameter of the ring member 342 on the basis of the outer diameter of the leg portion LP of the wave dissipating block CB to be grabbed). The outer periphery of the ring member 342 may be covered with a cushioning member such as rubber at least in part. The presence of the cushioning member can prevent the wire from being in direct contact with the leg portion LP, and can further reduce breakage of wave dissipating blocks CB. As shown in FIG. 12(A), the ring member 342 of the second holding mechanism 340 also is formed on the same plane. In other words, both the cross section of the part of the leg portion LP held by the first holding mechanism 316 and the cross section of the part of the leg portion LP held by the second holding mechanism 340 are configured to be flat planes and intersect at an acute angle (angle α is about 70°).

Next, a procedure for grabbing and moving a wave dissipating block CB using the wave dissipating block grapple-machine 310 according to the present embodiment will be described with reference to FIGs. 13(A) to 13(C).

Using the work machine 300, the wave dissipating block grapple-machine 310 is lowered from above the wave dissipating block CB (FIG. 13(A)).

Next, if needed, the direction of the second holding mechanism 340 is adjusted in advance using the work machine 300 on the basis of the direction of one of two leg portions LP (FIG. 13(B)). The inner diameter of the ring member 342 is adjusted in advance.

Next, the wave dissipating block grapple-machine 310 is lowered so that the second holding mechanism 340 is engaged with the one leg portion LP. Using the work machine 300, the first holding mechanism 316 is then brought close to and engaged with the other of the two leg portions LP on the basis of the state of engagement of the second holding mechanism 340.

Next, the other leg portion LP is held by the first holding mechanism 316. The holding by the first holding mechanism 316 prevents the one leg portion LP from slipping out of the ring member 342, and the one leg portion LP is held by the second holding member 340 (FIG. 13(C)).

Using the work machine 300, the wave dissipating block grapple-machine 310 is then lifted up to move the wave dissipating block CB.

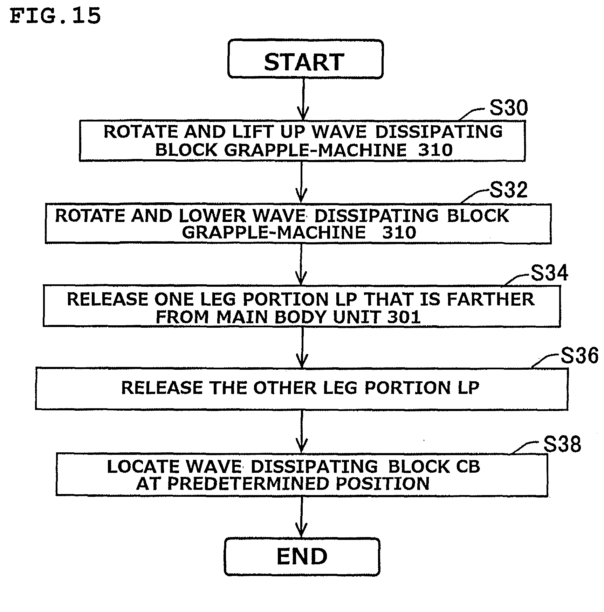

Next, a procedure for placing the wave dissipating block CB at a predetermined position using the wave dissipating block grapple-machine 310 according to the present embodiment will be described. This procedure can basically be implemented by performing operations in reverse order to that of FIGs. 13(A) to 13(C) on the basis of the flowchart shown in FIG. 8. A placement procedure unique to the present embodiment will be described below with reference to FIGs. 14(A) to 14(D) and 15.

The wave dissipating block grapple-machine 310 is initially rotated in a direction toward the main body unit 301 of the work machine 300, whereby the wave dissipating block grapple-machine 310 grabbing the wave dissipating block CB is lifted up (FIG. 14(A), step S30 in FIG. 15).

Next, the wave dissipating block grapple-machine 310 is rotated in a direction away from the main body unit 301, whereby the wave dissipating block CB is lowered and horizontally moved (FIG. 14(B), step S32 in FIG. 15).

Next, the first holding mechanism 316 that is the farther one of the first and second holding mechanisms 316 and 340 from the main body unit 301 releases one leg portion LP (FIG. 14(C), step S34 in FIG. 15).

Using the work machine 300, the rotation of the wave dissipating block grapple-machine 310 is then stopped to release the other leg portion LP from the second holding mechanism 340 (step S36 in FIG. 15). The wave dissipating block CB is thereby projected forward so that the wave dissipating block CB is located at a predetermined position (FIG. 14(D), step S38 in FIG. 15).

As described above, in the present embodiment, the second holding mechanism 340 includes the ring member 342 that makes a driving device unnecessary. The wave dissipating block grapple-machine 310 can thereby be further reduced in weight (for example, for a wave dissipating block CB of 6 tons, the wave dissipating block grapple-machine 110 according to the first embodiment has a weight of less than 4 tons. The wave dissipating block grapple-machine 310 according to the present embodiment can be further reduced to a weight of less than 3 tons, i.e., by approximately 1 ton). Consequently, in the present embodiment, if the work machine 300 is a 100-ton-class backhoe, the wave dissipating block grapple-machine 310 according to the present embodiment can be attached to freely move and place wave dissipating blocks CB of less than 10 tons that are mainly used on rivers. This enables precise and quick placement of wave dissipating blocks CB that have been unable to be adequately placed at intended predetermined positions using a crane truck or a crane barge. Moreover, the use of the wave dissipating block grapple-machine 310 according to the present embodiment enables the projection of wave dissipating blocks CB. At the time of torrential rain or the like with the rising risk of collapsing river banks, wave dissipating blocks CB can thus be quickly moved and piled up from right near the spot as emergency measures.

In the aforementioned embodiments, the wave dissipating block CB has four leg portions LP (with circular radial cross sections) extending from the barycenter of a regular tetrahedron. However, this is not restrictive. For example, a wave dissipating block CB can have any configuration including a plurality of (two or more) leg portions LP extending in respective different directions. The radial cross-sectional shapes of the leg portions LP are not limited to a circular shape, either, and may be elliptic shapes, polygonal shapes, or a combination of these.

### Industrial Applicability

The present invention is suitable for moving, transporting, and installing wave dissipating blocks having a plurality of legs extending in respective different directions and used on rivers and harbors.

### Reference Signs List

100, 200, 300 ... work machine
101, 301 ... main body unit
102, 202, 302 ... arm body
104 ... main wheel
106 ... relay wheel
110, 210, 310 ... wave dissipating block grapple-machine
112, 212, 312 ... attachment unit
112A, 212AA, 312A ... main attachment hole
112B ... extending portion
112C, 312B ... sub attachment hole
114, 214, 314 ... base member
114A ... connection portion
114B ... outside portion
114C ... split center portion
114D ... split support portion
114E, 202A, 314B ... rotation support portion
114F, 314C ... pressure portion
116, 216, 316 ... first holding mechanism
118, 318 ... first holding member
118A, 142A, 318A ... end portion
118B, 142B, 318B ... upper end
120, 144, 320 ... contact portion
122, 222, 322 ... first driving device
124, 324, SU ... linear motion mechanism
124A, 124B, SU1, SU2 ... cylinder chamber
126, DM ... driving mechanism
128 ... casing
128A, 128B ... rod
130 ... first switching channel member
132 ... second switching channel member
134 ... first electric linear motion mechanism
134A, 136A ... support unit
134B, 136B ... motor unit
134C, 136C ... connection unit
134D, 136D ... fixed unit
134E ... movable unit
134F, 136F, 212BA, 212BC ... coupling unit
136 ... second electric linear motion mechanism
140, 240, 340 ... second holding mechanism
142 ... second holding member
146, 246 ... second driving device
212A ... rotation support portion
212B ... orientation changing unit
212BB ... cylinder unit
212C ... rotating portion
302A ... support shaft
302B ... link shaft
313 ... rotation device
314A ... frame
314D ... second holding mechanism support portion
342 ... ring member
344 ... adjustment member
BV1, BV2, BV3, BV4 ... on-off valve
CB ... wave dissipating block
CU ... control unit
FI ... fluid pressure inlet
FK ... hook
FO ... fluid discharge outlet
LK1, LK2, LK3, LK4 ... lever member
LP ... leg portion
Mw ... main wire
PP ... pump
PU ... pump unit
PV1, PV2 ... pilot-controlled check valve
SV ... solenoid valve
Sw ... sub wire
TB1, TB2, TB3, TB4, TB5, TB6 ... pipe
α ... angle

## Claims

1. A wave dissipating block grapple-machine (110,210,310) that is supported by a work machine (100,200,300) and can grab a wave dissipating block (CB) having a plurality of leg portions (LP) extending in respective different directions, the wave dissipatating block grapple-machine (110, 210, 310) comprising:a first holding mechanism (116, 216, 316) and a second holding mechanism (140, 240, 340) configured to radially hold respective two of the leg portions (LP); and a base member (114, 214, 314) that is rotatably supported by the work machine (100, 200, 300), the base member (114, 214, 314) being configured to support the first holding mechanism (116, 216, 316) and the second holding mechanism (140, 240, 340), wherein the first holding mechanism (116, 216, 316) includes a pair of first holding members (118, 218, 318) that are rotatably supported by the base member (114, 214, 314) and can grab one of the two leg portions (LP) by bringing their end portions (118A, 218A, 318A) close to each other, and a first driving device (122, 222, 322) configured to drive the pair of first holding members (116, 216, 316) to rotate; the first driving device (122, 222, 322) includes one linear motion mechanism (124, 324) that is built in the wave dissipating block grapple-machine (110, 210, 310) and has respective ends of which upper ends (118B, 318B) of the pair of first holding members (116, 216, 316) are directly coupled; the linear motion mechanism is a cylinder mechanism (124, 324) including two cylinder chambers (124A, 124B) where fluid can flow in and that are separated by the piston; the first driving device (122, 222, 322) includes a driving mechanism (126) that is built in the wave dissipating block grapple-machine (110, 210, 310) and drives the one linear motion mechanism (124, 324),
**characterized in that** the driving mechanism (126) includes an on-off valve (BV1, BV2, BV3, BV4) that can prevent the fluid in the two cylinder chambers (124A, 124B) from decreasing and fix an operation of the linear motion mechanism (124, 324);
the driving mechanism (126) includes a first switching channel member (130) and a second switching channel member (132) that are both connected to the two cylinder chambers (124A, 124B) and each include two on-off valves (BV1, BV2, BV3, BV4), a first electric linear motion mechanism (134) configured to simultaneously open and close one (BV2) of the two on-off valves (BV1, BV2) in the first switching channel member (130) and one (BV4) of the two on-off valves (BV3, BV4) in the second switching channel member (132), and a second electric linear motion mechanism (136) configured to simultaneously open and close the other on-off valves (BV1, BV3) in the first switching channel member (130) and the second switching channel member (132); and
the second switching channel member (132) is configured so that a fluid pressure inlet (FI) for feeding the fluid into the two cylinder chambers (124A, 124B) from a pump (PP) is disposed between the two on-off valves (BV3, BV4), and the first switching channel member (130) is configured so that a fluid discharge outlet (FO) for discharging the fluid from the two cylinder chambers (124A, 124B) is disposed between the two on-off valves (BV1, BV2).

2. The wave dissipating block grapple-machine (110, 210) according to claim 1, wherein:
the second holding mechanism (140, 240) is configured to be the same as the first holding mechanism (116, 216); and
includes a pair of second holding members (142) that are rotatably supported by the base member (114, 214) and can grab the other of the two leg portions (LP) by bringing their end portions (142A) close to each other and a second driving device (146, 246) configured to drive the pair of second holding members (142) to rotate.

## Patentansprüche

1. Vorrichtung zum Greifen eines wellenabschwächenden Blocks (110, 210, 310), die von einer Arbeitsmaschine (100, 200, 300) getragen wird und einen wellenabschwächenden Block (CB), der mehrere sich in jeweils unterschiedliche Richtungen erstreckende Beinabschnitte (LP) aufweist, greifen kann, wobei die Vorrichtung zum Greifen eines wellenabschwächenden Blocks (110, 210, 310) aufweist: einen ersten Haltemechanismus (116, 216, 316) und einen zweiten Haltemechanismus (140, 240, 340), die konfiguriert sind, jeweils zwei der Beinabschnitte (LP) radial zu halten; und ein Basiselement (114, 214, 314), das drehbar von der Arbeitsmaschine (100, 200, 300) gehalten wird, wobei das Basiselement (114, 214, 314) konfiguriert ist, den ersten Haltemechanismus (116, 216, 316) und den zweiten Haltemechanismus (140, 240, 340) zu tragen, wobei der erste Haltemechanismus (116, 216, 316) ein Paar erster Halteelemente (118, 218, 318), die drehbar an dem Basiselement (114, 214, 314) gelagert sind und einen der beiden Beinabschnitte (LP) greifen können, indem sie ihre Endabschnitte (118A, 218A, 318A) nahe zueinander bringen, und eine erste Antriebsvorrichtung (122, 222, 322) umfasst, die konfiguriert ist, das Paar erster Halteelemente (116, 216, 316) in Drehung zu versetzen; wobei die erste Antriebsvorrichtung (122, 222, 322) einen Linearbewegungsmechanismus (124, 324) aufweist, der in die Vorrichtung zum Greifen eines wellenabschwächenden Blocks (110, 210, 310) eingebaut ist und dessen jeweilige Enden, direkt mit oberen Enden (118B, 318B) des Paares erster Halteelemente (116, 216, 316) gekoppelt sind; wobei der Linearbewegungsmechanismus ein Zylindermechanismus (124, 324) ist, der zwei Zylinderkammern (124A, 124B) aufweist, in die Fluid einströmen kann und die durch den Kolben getrennt sind; wobei die erste Antriebsvorrichtung (122, 222, 322) einen Antriebsmechanismus (126) umfasst, der in die Vorrichtung zum Greifen eines wellenabschwächenden Blocks (110, 210, 310) eingebaut ist und den einen Linearbewegungsmechanismus (124, 324) antreibt,
**dadurch gekennzeichnet, dass** der Antriebsmechanismus (126) ein Ein-Aus-Ventil (BV1, BV2, BV3, BV4) aufweist, das verhindern kann, dass das Fluid in den beiden Zylinderkammern (124A, 124B) abnimmt, und einen Betrieb des Linearbewegungsmechanismus (124, 324) festlegen kann;
der Antriebsmechanismus (126) ein erstes Schaltkanalelement (130) und ein zweites Schaltkanalelement (132), die beide mit den beiden Zylinderkammern (124A, 124B) verbunden sind und jeweils zwei Ein-Aus-Ventile (BV1, BV2, BV3, BV4) aufweisen, einen ersten elektrischen Linearbewegungsmechanismus (134), der so konfiguriert ist, dass er gleichzeitig eines (BV2) der beiden Ein-/Aus-Ventile (BV1, BV2) im ersten Schaltkanalelement (130) und eines (BV4) der beiden Ein-/Aus-Ventile (BV3, BV4) im zweiten Schaltkanalelement (132) öffnen und schließen kann, und einen zweiten elektrischen Linearbewegungsmechanismus (136), der so konfiguriert ist, dass er gleichzeitig die anderen Ein-/Aus-Ventile (BV1, BV3) im ersten Schaltkanalelement (130) und im zweiten Schaltkanalelement (132) öffnen und schließen kann, aufweist; und
das zweite Schaltkanalelement (132) so konfiguriert ist, dass ein Fluiddruckeinlass (FI) zum Einleiten des Fluids in die beiden Zylinderkammern (124A, 124B) von einer Pumpe (PP) zwischen den beiden Ein-/Aus-Ventilen (BV3, BV4) angeordnet ist, und das erste Schaltkanalelement (130) so konfiguriert ist, dass ein Fluidauslass (FO) zum Auslassen des Fluids aus den beiden Zylinderkammern (124A, 124B) zwischen den beiden Ein-/Aus-Ventilen (BV1, BV2) angeordnet ist.

2. Vorrichtung zum Greifen eines wellenabschwächenden Blocks (110, 210) gemäß Anspruch 1, wobei:
der zweite Haltemechanismus (140, 240) so konfiguriert ist, dass er mit dem ersten Haltemechanismus (116, 216) identisch ist; und
ein Paar zweiter Halteelemente (142) umfasst, die drehbar von dem Basiselement (114, 214) gehalten werden und das andere der beiden Beinabschnitte (LP) greifen können, indem sie ihre Endabschnitte (142A) nahe zueinander bringen, sowie eine zweite Antriebsvorrichtung (146, 246), die so konfiguriert ist, dass sie das Paar zweiter Halteelemente (142) in Drehung versetzt.

## Revendications

1. Dispositif de préhension de bloc de dissipation d'onde (110, 210, 310) qui est supporté par une machine de travail (100, 200, 300) et peut saisir un bloc de dissipation d'onde (CB) comportant une pluralité de parties de jambe (LP) s'étendant dans des directions différentes respectives, le dispositif de préhension de bloc de dissipation d'onde (110, 210, 310) comprenant : un premier mécanisme de maintien (116, 216, 316) et un second mécanisme de maintien (140, 240, 340) configurés pour maintenir radialement deux des parties de jambe (LP) respectives; et un élément de base (114, 214, 314) qui est supporté de manière rotative par la machine de travail (100, 200, 300), l'élément de base (114, 214, 314) étant configuré pour supporter le premier mécanisme de maintien (116, 216, 316) et le second mécanisme de maintien (140, 240, 340), dans lequel le premier mécanisme de maintien (116, 216, 316) comprend une paire de premiers éléments de maintien (118, 218, 318) qui sont supportés de manière rotative par l'élément de base (114, 214, 314) et pouvant saisir l'une des deux parties de jambe (LP) en rapprochant leurs parties d'extrémité (118A, 218A, 318A) l'une de l'autre, et un premier dispositif d'entraînement (122, 222, 322) configuré pour entraîner la paire de premiers éléments de maintien (116, 216, 316) en rotation; le premier dispositif d'entraînement (122, 222, 322) comprend un mécanisme à mouvement linéaire (124, 324) qui est intégré dans le dispositif de préhension de bloc de dissipation d'onde (110, 210, 310) et dont les extrémités respectives, à savoir les extrémités supérieures (118B, 318B) de la paire de premiers éléments de maintien (116, 216, 316) sont directement couplées; le mécanisme à mouvement linéaire est un mécanisme à cylindre (124, 324) comprenant deux chambres de cylindre (124A, 124B) dans lesquelles le fluide peut s'écouler et qui sont séparées par le piston; le premier dispositif d'entraînement (122, 222, 322) comprend un mécanisme d'entraînement (126) qui est intégré dans le dispositif de préhension de bloc de dissipation d'onde (110, 210, 310) et entraîne le mécanisme à mouvement linéaire (124, 324), **caractérisé en ce que** le mécanisme d'entraînement (126) comprend une vanne marche-arrêt (BV1, BV2, BV3, BV4) qui peut empêcher le fluide dans les deux chambres de cylindre (124A, 124B) de diminuer et fixer un fonctionnement du mécanisme de mouvement linéaire (124, 324);
le mécanisme d'entraînement (126) comprend un premier élément de canal de commutation (130) et un second élément de canal de commutation (132) qui sont tous deux reliés aux deux chambres de cylindre (124A, 124B) et comprennent chacun deux vannes marche-arrêt (BV1, BV2, BV3, BV4), un premier mécanisme de mouvement linéaire électrique (134) configuré pour ouvrir et fermer simultanément l'une (BV2) des deux vannes marche-arrêt (BV1, BV2) dans le premier élément de canal de commutation (130) et l'une (BV4) des deux vannes marche-arrêt (BV3, BV4) dans le second élément de canal de commutation (132), et un second mécanisme électrique à mouvement linéaire (136) configuré pour ouvrir et fermer simultanément les autres vannes marche-arrêt (BV1, BV3) dans le premier élément de canal de commutation (130) et le second élément de canal de commutation (132); et
le second élément de canal de commutation (132) est configuré de telle sorte qu'une entrée de pression de fluide (FI) pour alimenter les deux chambres de cylindre (124A, 124B) à partir d'une pompe (PP) est disposée entre les deux vannes marche-arrêt (BV3, BV4), et le premier élément de canal de commutation (130) est configuré de telle sorte qu'une sortie de décharge de fluide (FO) permettant de décharger le fluide des deux chambres de cylindre (124A, 124B) est disposée entre les deux vannes marche-arrêt (BV1, BV2).

2. Dispositif de préhension de bloc de dissipation d'onde (110, 210) selon la revendication 1, dans lequel:
le second mécanisme de maintien (140, 240) est configuré pour être identique au premier mécanisme de maintien (116, 216); et
comprend une paire de seconds éléments de maintien (142) qui sont supportés de manière rotative par l'élément de base (114, 214) et peuvent saisir l'autre des deux parties de jambe (LB) en rapprochant leurs parties d'extrémité (142A) l'une de l'autre, et un second dispositif d'entraînement (146, 246) configuré pour entraîner la paire de seconds éléments de maintien (142) en rotation.
